# EUROPEAN PATENT APPLICATION

(11) **EP 4 843 818 A1**
(43) Date of publication of application: **25.11.2026**
(21) Application number: 26174678.8
(22) Date of filing: 27.04.2026
(51) Int. Cl.: B60L 53/14, B60L 53/62, B60L 53/63

(54) **CHARGING CONTROL DEVICE**

(30) Priority: 19.05.2025 JP 2025083050
(71) Applicant: Toyota Jidosha Kabushiki Kaisha, Toyota-shi, Aichi-ken 471-8571 (JP)
(72) Inventor: SATO, Shun, Toyota-shi, Aichi-ken, 471-8571 (JP)
(74) Representative: TBK

(57) **Abstract**

A charging control device (100) is a device that controls charging of a vehicle (200) that is charged from a power supply facility (10). The vehicle (200) includes a battery (214). The charging control device (100) includes a processor (101). The processor (101) is configured to determine a first value that allows a determination of maximum power of power output from the power supply facility (10) to the vehicle (200), charge the battery (214) in a case where the first value is greater than a predetermined second value, and refrain from charging the battery (214) in a case where the first value is less than the second value.

## Description

### BACKGROUND OF THE INVENTION

### 1. Field of the Invention

The present disclosure relates to a charging control device, and more particularly to a charging control device for a vehicle that is charged from a power supply facility.

### 2. Description of Related Art

Conventionally, there has been known a method of determining whether to charge an electrified vehicle according to the maximum charging power from a charging device (charging stand) to the electrified vehicle (see Japanese Unexamined Patent Application Publication No. 2016-15829 (JP 2016-15829 A), for example).

### SUMMARY OF THE INVENTION

However, there are cases where the power available for charging is low. When charging is performed in such cases, the amount of power used by an ECU (Electronic Control Unit) of the electrified vehicle may be greater than the amount of power supplied from the charging device. Then, the power of a battery of the electrified vehicle is reduced even though charging is being performed.

This disclosure provides a charging control device that can suppress a reduction in the amount of power stored in a battery during charging.

A first aspect of the present disclosure provides a charging control device for a vehicle that is charged from a power supply facility, the charging control device including a processor. The vehicle includes a battery. The processor is configured to determine a first value that allows a determination of maximum power of power output from the power supply facility to the vehicle, charge the battery in a case where the first value is greater than a predetermined second value, and refrain from charging the battery in a case where the first value is less than the second value.

In a case where the maximum power of power output from the power supply facility to the vehicle is less than the power consumed in the vehicle other than power for charging, the power of the battery is consumed during charging. According to such a configuration, charging of the battery is performed in a case where the maximum power is greater than the predetermined second value, and the charging of the battery is not performed in a case where the maximum power is less than the predetermined second value. As a result, it is possible to provide a charging control device that can suppress a reduction in the amount of power stored in a battery during charging.

In the charging control device according to the first aspect of the present disclosure, the first value may be a value of the maximum power, and the second value may be a value of power consumed in the vehicle other than power for charging.

According to such a configuration, the charging of the battery is performed in a case where the value of the maximum power is greater than the value of the consumed power, and the charging of the battery is not performed in a case where the value of the maximum power is less than the value of the consumed power. As a result, it is possible to suppress a reduction in the amount of power stored in the battery during charging.

In the charging control device according to the first aspect of the present disclosure, the first value may be a value of a maximum current corresponding to the maximum power, and the second value may be a value of a consumed current corresponding to power consumed in the vehicle other than power for charging.

According to such a configuration, the charging of the battery is performed in a case where the value of the maximum current corresponding to the maximum power is greater than the value of the consumed current corresponding to the consumed power, and the charging of the battery is not performed in a case where the value of the maximum current corresponding to the maximum power is less than the value of the consumed current corresponding to the consumed power. As a result, it is possible to suppress a reduction in the amount of power stored in the battery during charging.

In the charging control device according to the first aspect of the present disclosure, the second value may be greater than 0 A and equal to or less than 1 A.

According to such a configuration, the charging of the battery is not performed in a case where the value of the maximum current value is significantly small. As a result, it is possible to suppress a reduction in the amount of power stored in the battery during charging.

In the charging control device according to the first aspect of the present disclosure, the second value is a value that allows a determination of power consumed in the vehicle other than power for charging, and the power consumed in the vehicle other than power for charging may be power consumed by the charging control device.

According to such a configuration, the charging of the battery is performed in a case where the maximum power is greater than the power consumed by the charging control device, and the charging of the battery is not performed in a case where the maximum power is less than the power consumed by the charging control device. As a result, it is possible to suppress a reduction in the amount of power stored in the battery during charging.

In the charging control device according to the first aspect of the present disclosure, the vehicle may further include an in-vehicle facility configured to consume power while being charged from the power supply facility. The second value is a value that allows a determination of power consumed in the vehicle other than power for charging. The power consumed in the vehicle other than power for charging may be power obtained by adding the power consumed by the in-vehicle facility to power consumed by the charging control device.

According to such a configuration, the charging of the battery is performed in a case where the maximum power is greater than the power obtained by adding the power consumed by the in-vehicle facility to the power consumed by the charging control device, and the charging of the battery is not performed in a case where the maximum power is less than the power obtained by adding the power consumed by the in-vehicle facility to the power consumed by the charging control device. As a result, it is possible to suppress a reduction in the amount of power stored in the battery during charging.

In the charging control device according to the first aspect of the present disclosure, the vehicle may further include an in-vehicle facility configured to consume power while being charged from the power supply facility. The processor may be configured to charge the battery in a case where the in-vehicle facility is in a stopped state and the first value is greater than the second value, refrain from charging of the battery in a case where the in-vehicle facility is in the stopped state and the first value is less than the second value, charge the battery in a case where the in-vehicle facility is in the stopped state and the first value is greater than a predetermined third value, and refrain from charging the battery in a case where the in-vehicle facility is in the stopped state and the first value is less than the third value. The third value may be a value that is greater than the second value.

According to such a configuration, in a case where the in-vehicle facility is operating, the charging of the battery is performed in a case where the first value is greater than the third value, and the charging of the battery is not performed in a case where the first value is less than the third value. On the other hand, in a case where the in-vehicle facility is not operating, the charging of the battery is performed in a case where the first value is greater than the second value, and the charging of the battery is not performed in a case where the first value is less than the second value. As a result, it is possible to suppress a reduction in the amount of power stored in the battery during charging.

In the charging control device according to the first aspect of the present disclosure, the third value is a value that allows a determination of power obtained by adding the power consumed by the in-vehicle facility to power consumed by the charging control device, and the second value is a value that allows a determination of the power consumed by the charging control device.

According to such a configuration, in a case where the in-vehicle facility is operating, the charging of the battery is performed in a case where the maximum power is greater than the power obtained by adding the power consumed by the in-vehicle facility to the power consumed by the charging control device, and the charging of the battery is not performed in a case where the maximum power is less than the power obtained by adding the power consumed by the in-vehicle facility to the power consumed by the charging control device. On the other hand, in a case where the in-vehicle facility is not operating, the charging of the battery is performed in a case where the maximum power is greater than the power consumed by the charging control device, and the charging of the battery is not performed in a case where the maximum power is less than the power consumed by the charging control device. As a result, it is possible to suppress a reduction in the amount of power stored in the battery during charging.

In the charging control device according to the first aspect of the present disclosure, the processor may be configured to compare the first value and the second value based on a loss due to aging deterioration of a power path.

According to such a configuration, even when the power path has deteriorated over time, it is possible to appropriately compare the maximum power that can be output from the power supply facility to the vehicle with the power consumed in the vehicle other than power for charging. As a result, it is possible to appropriately suppress a reduction in the amount of power stored in the battery during charging.

In the charging control device according to the first aspect of the present disclosure, the processor may be configured to determine whether the first value is greater than the second value.

In the charging control device according to the first aspect of the present disclosure, the first value is a value that is used to determine the maximum power or the maximum current corresponding to the maximum power.

In the charging control device according to the first aspect of the present disclosure, the second value is a value that is used to determine the power consumed in the vehicle other than the power for charging.

In the charging control device according to the first aspect of the present disclosure, the processor may be configured to determine whether the first value is greater than the third value.

In the charging control device according to the first aspect of the present disclosure, the second value is a value that is used to determine the power consumed by the charging control device, and the third value is a value that is used to determine the power obtained by adding the power consumed by the in-vehicle facility to the power consumed by the charging control device.

According to this disclosure, it is possible to provide a charging control device that can suppress a reduction in the amount of power stored in a battery during charging.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a diagram illustrating an example of the configuration of a vehicle according to an embodiment;
FIG. 2 is a flowchart illustrating the flow of a charging control process according to a first embodiment;
FIG. 3 is a graph indicating the aging deterioration of the efficiency of power transmission through a power line from an inlet to a battery of the vehicle according to the embodiment;
FIG. 4 is a flowchart illustrating the flow of a charging control process according to a second embodiment;
FIG. 5 is a flowchart illustrating the flow of a charging control process according to a third embodiment; and
FIG. 6 is a flowchart illustrating the flow of a charging control process according to a fourth embodiment.

### DETAILED DESCRIPTION OF EMBODIMENTS

Embodiments of this disclosure will be described in detail below with reference to the drawings. The same or corresponding portions in the drawings are denoted by the same reference signs and repetitive description will be omitted.

### First Embodiment

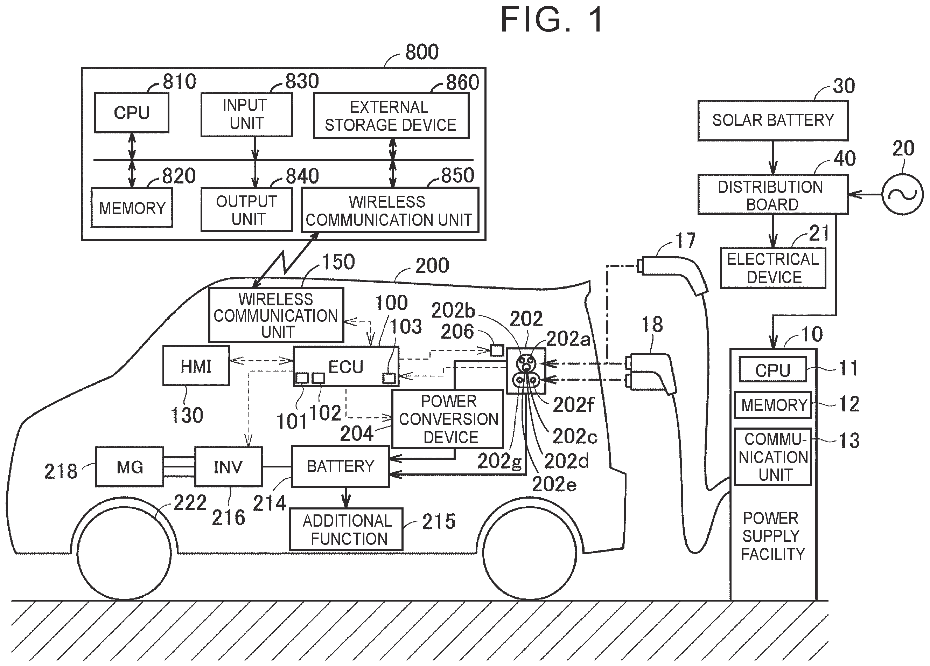

The configuration of an electrified vehicle (hereinafter referred to as a vehicle) 200 according to this embodiment will be described below. FIG. 1 is a diagram illustrating an example of the configuration of the vehicle 200 according to this embodiment. The vehicle 200 includes an electrified vehicle capable of receiving and transmitting power to and from an electrical device that is external to the vehicle 200, such as a plug-in hybrid electric vehicle (PHEV) and a battery electric vehicle (BEV), for example. In FIG. 1, it is assumed that the vehicle 200 is parked in a parking space of a facility such as a residence or a business establishment where a power supply facility 10 is installed, for example.

The facility is equipped with the power supply facility 10, an electrical device 21, a solar battery 30, and a distribution board 40. The solar battery 30 includes a solar panel and a power conditioner. The solar panel converts light energy from the sun or the like into DC power using the photovoltaic effect. The power conditioner converts the DC power from the solar panel into AC power. The distribution board 40 distributes AC power from a power system 20 and the solar battery 30 to the electrical device 21 and the power supply facility 10 within the facility. The electrical device 21 is a device that performs predetermined operation using the AC power, and may be a lighting device, an air-conditioning device, and a household electrical device, for example.

The power supply facility 10 includes an AC charging connector 17, a DC charging connector 18, a CPU (Central Processing Unit) 11, a memory 12, and a communication unit 13. The power supply facility 10 supplies the AC power from the distribution board 40 to the vehicle 200 through the AC charging connector 17, or converts the AC power from the distribution board 40 into DC power and supplies the DC power to the vehicle 200 through the DC charging connector 18. The CPU 11 communicates with the vehicle 200 using the communication unit 13 according to a program and data stored in the memory 12 and controls charging of the vehicle 200.

The vehicle 200 includes an ECU 100, an inlet 202, a power conversion device 204, a locking mechanism 206, a battery 214, an inverter 216, a motor generator (MG) 218, an HMI (Human Machine Interface) 130, a wireless communication unit 150, and an additional function 215.

The motor generator 218 is a three-phase AC rotating electric machine, for example, and has a function as an electric motor (motor) and a function as an electric generator (generator). That is, the motor generator 218 exchanges power with the inverter 216.

The motor generator 218 provides a rotational force to drive wheels 222 using the power supplied from the inverter 216 when the vehicle 200 is driven, for example. The drive wheels 222 are rotated by the rotational force provided by the motor generator 218, causing the vehicle 200 to travel. The number of the motor generator 218 is not limited to one, and there may be a plurality of motor generators 218.

The inverter 216 converts power bidirectionally between motor generator 218 and the battery 214 in response to a control signal from the ECU 100. When the motor generator 218 is driven, for example, the inverter 216 converts the DC power of the battery 214 into AC power and supplies the AC power to the motor generator 218. Furthermore, when the motor generator 218 is generating power, for example, the inverter 216 converts the AC power (regenerative power) generated by the motor generator 218 into DC power and supplies the DC power to the battery 214. A converter that adjusts the voltage of the inverter 216 and the voltage of the battery 214 may be provided between the inverter 216 and the battery 214.

The battery 214 is a power storage element configured to be rechargeable, for example, and is typically a secondary battery such as a nickel metal hydride battery or a lithium-ion battery having a solid or liquid electrolyte. Alternatively, the battery 214 may be any power storage device capable of storing power, and a high-capacity capacitor may be used instead of the battery 214, for example.

The battery 214 is externally charged using power supplied from the power supply facility 10. External charging includes AC charging, which uses DC power that is supplied by the power conversion device 204 converting AC power supplied from an external facility (power supply facility 10) to the inlet 202, and DC charging, which uses DC power that is supplied from the power supply facility 10 to the inlet 202 without passing through the power conversion device 204.

The inlet 202 is provided in an exterior portion of the vehicle 200 together with a cover (not illustrated) such as a lid, and is configured to allow attachment of various connectors, which will be described later. The inlet 202 is configured to be able to exchange power with a facility that is external to the vehicle 200 (hereinafter referred to as an external facility). Here, being "able to exchange power" means being able to be charged with power and/or discharge power. That is, the inlet 202 can receive power supplied from the external facility to be used to charge the battery 214. Furthermore, the inlet 202 allows the supply (discharge, power supply) of power from the battery 214 to the external facility.

The inlet 202 has a shape that allows the inlet 202 to be attached to either of the AC charging connector 17 that is used for AC charging and the DC charging connector 18 that is used for DC charging. The inlet 202 is provided with AC connection portions 202a and 202b, DC connection portions 202f and 202g, and communication portions 202c to 202e.

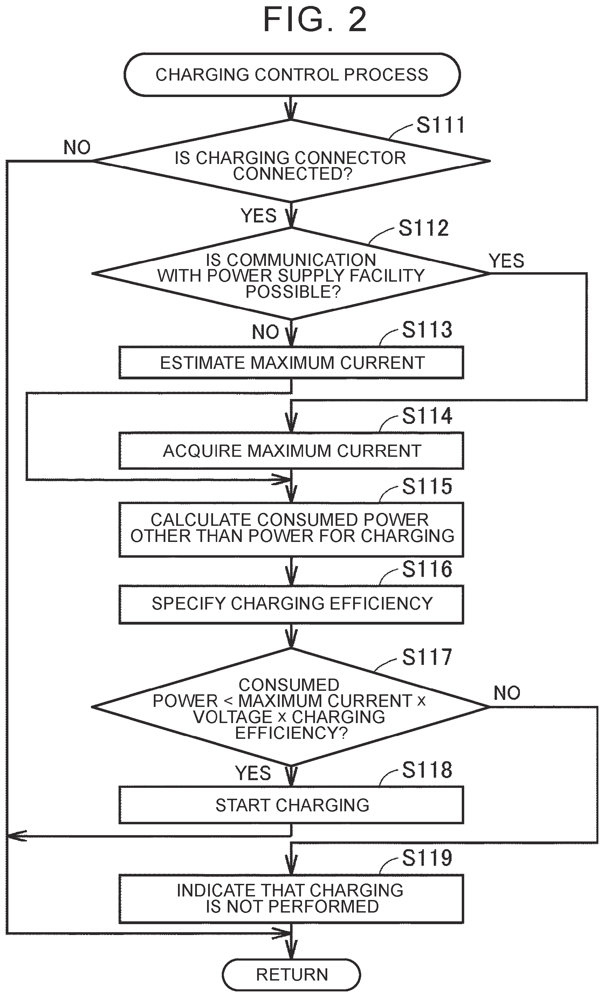

When the AC charging connector 17 of the power supply facility 10 is attached to the inlet 202, an AC connection portion (see FIG. 2) of the AC charging connector 17 is electrically connected to the AC connection portions 202a and 202b of the inlet 202, and a communication portion (see FIG. 2) of the AC charging connector 17 is connected to the communication portions 202c to 202e of the inlet 202.

When the DC charging connector 18 of the power supply facility 10 is attached to the inlet 202, an AC connection portion of the DC charging connector 18 is electrically connected to the AC connection portions 202a and 202b of the inlet 202, and a communication portion of the DC charging connector 18 is connected to the communication portions 202c to 202e of the inlet 202.

The power conversion device 204 performs power conversion between the battery 214 and the inlet 202 in response to a control signal from the ECU 100. For example, when AC charging of the battery 214 is performed with the AC charging connector 17 attached to the inlet 202, the power conversion device 204 converts the AC power supplied from the AC charging connector 17 into DC power and charges the battery 214 using the converted DC power.

The locking mechanism 206 establishes a state (locked state) in which removal of the connector attached to the inlet 202 is restricted, thereby fixing the connector to the inlet 202, or establishes a state (unlocked state) in which the restriction on removal of the connector is released, thereby enabling removal of the connector from the inlet 202. The locking mechanism 206 is provided with an actuator that establishes the locked state by moving a member to a position where the movement of the connector in the state of being attached to the inlet 202 is restricted, or establishes the unlocked state by moving the member to a position where the movement of the connector in the state of being attached to the inlet 202 is allowed, for example. That is, the locking mechanism 206 switches from one of the locked state and the unlocked state to the other in response to a control signal from the ECU 100.

The ECU 100 incorporates a CPU 101, a memory (including, for example, a ROM (Read Only Memory), a RAM (Random Access Memory), etc.) 102, and an interface 103, and controls various devices (such as the power conversion device 204, the locking mechanism 206, and the inverter 216, for example) by outputting a signal from the interface 103 such that the vehicle 200 is brought into a desired state based on information such as a map and a program stored in the memory 102 and information from various sensors received by the interface 103. The various controls performed by the ECU 100 are not limited to software processes, and may be performed by constructing dedicated hardware (electronic circuitry). The CPU 101 may be a processor.

Furthermore, when a connector (AC charging connector 17, DC charging connector 18) is attached to the inlet 202, the ECU 100 executes a communication process to receive predetermined information from a device on the connector side (power supply facility 10) through the interface 103. The predetermined information includes information about the power that can be exchanged between the power supply facility 10 and the battery 214, for example.

For example, when the AC charging connector 17 is attached to the inlet 202, the communication portion of the AC charging connector 17 is connected to the communication portions 202c, 202d, and 202e of the inlet 202, and the ECU 100 receives, from the power supply facility 10 (more specifically, the AC charging connector 17) through the interface 103, predetermined information including information indicating that the power exchanged between the attached AC charging connector 17 and the inlet 202 is AC power, and information indicating that the power exchanged between the AC charging connector 17 and the inlet 202 is charging power for charging the battery 214.

Alternatively, when the DC charging connector 18 is attached to the inlet 202, for example, the communication portion of the DC charging connector 18 is connected to the communication portions 202c, 202d, and 202e of the inlet 202, and the ECU 100 receives, from the power supply facility 10 (more specifically, the DC charging connector 18) through the interface 103, predetermined information including information indicating that the power exchanged between the DC charging connector 18 attached from the power supply facility 10 and the inlet 202 is DC power, and information indicating that the power exchanged between the DC charging connector 18 and the inlet 202 is charging power.

When the AC charging connector 17 of the power supply facility 10 is attached to the inlet 202 of the vehicle 200, the power supply facility 10 supplies AC power to the inlet 202. The AC power supplied to the inlet 202 is converted into DC power by the power conversion device 204. The converted DC power is supplied to the battery 214 to charge the battery 214.

When the DC charging connector 18 of the power supply facility 10 is attached to the inlet 202 of the vehicle 200, the power supply facility 10 supplies DC power to the inlet 202. The DC power supplied to the inlet 202 is supplied to the battery 214, without passing through the power conversion device 204, to charge the battery 214.

The HMI 130 is configured with a touch panel display, and displays information received from the ECU 100 on the display, and transmits information received through the touch panel to the ECU 100.

The wireless communication unit 150 is controlled by the ECU 100, and receives a wireless signal from another device, such as a terminal device 800, a server, or another vehicle 200, converts the received wireless signal into data, stores the converted data in the memory 102, transmits the data to the HMI 130 to be displayed, and converts the data to be transmitted into a wireless signal and transmits the wireless signal to another device as a data communication destination.

The additional function 215 is a function that operates in conjunction during external charging of the battery 214, and operates using the power of the battery 214. Examples of the additional function 215 include functions of an air conditioner, a drive recorder, etc. The additional function 215 may be referred to as an in-vehicle facility. The additional function 215 may include the wireless communication unit 150 that is used for data communication with an external server during external charging, and the HMI 130 that is used to display the charging status of the battery 214 during external charging.

The terminal device 800 includes a CPU 810, a memory 820, an input unit 830, an output unit 840, a wireless communication unit 850, and an external storage device 860. The CPU 810, the memory 820, the input unit 830, the output unit 840, the wireless communication unit 850, and the external storage device 860 are connected to each other by a bus.

The memory 820 includes a RAM (Random Access Memory) that is used as a work area required for the CPU 810 to execute a program, and a ROM (Read Only Memory) that stores the program to be executed by the CPU 810. Furthermore, a program and data for executing a predetermined process are read from the ROM and stored in the RAM.

The input unit 830 includes a touch panel and operation buttons for inputting numbers, alphabets, and other characters such as telephone numbers and various data. The input unit 830 may also include a portion for other operations. When the input unit 830 is operated by a user, an operation signal corresponding to the operation is transmitted from the input unit 830 to the CPU 810. The CPU 810 controls various units of the terminal device 800 in response to the operation signal from the input unit 830.

The output unit 840 includes a display and a speaker. The display is formed integrally with the touch panel mentioned above. The output unit 840 is controlled by the CPU 810, and displays an image signal on the display as an image and outputs an audio signal from the speaker as audio, the image signal and the audio signal being obtained by the CPU 810 converting information received by the wireless communication unit 850, information stored in the memory 820, or information read from a storage medium by the external storage device 860.

The wireless communication unit 850 is controlled by the CPU 810, and receives a wireless signal via a public line and an antenna from another terminal device 800 or a fixed-line telephone of the communication partner, converts the received wireless signal into an audio signal, and transmits the converted audio signal to an audio input/output unit, and converts an audio signal from the audio input/output unit into a wireless signal and transmits the wireless signal to another terminal device 800 or a fixed-line telephone of the communication partner via an antenna and a communication facility of a telecommunications carrier.

In addition, the wireless communication unit 850 is controlled by the CPU 810, and receives a wireless signal via a public line and an antenna from a device capable of data communication, such as the vehicle 200, a server, or another terminal device 800, converts the received wireless signal into data, and stores the converted data in the memory 820 or transmits the data to the output unit 840 to be displayed, and converts the data to be transmitted into a wireless signal and transmits the wireless signal to the vehicle 200, a server, or another terminal device 800 as the data communication destination via an antenna and a communication facility of a telecommunications carrier.

The external storage device 860 is configured as a memory card reader/writer. The external storage device 860 electrically records predetermined data or a program received from the CPU 810 in a storage medium such as a memory card or a USB (Universal Serial Bus) memory, or reads the data or the program from the storage medium and delivers the data or the program to the CPU 810. The external storage device 860 may be configured as a storage device such as a hard disk drive, a flexible disk drive, an MO (Magneto-Optical disk) drive, a CD (Compact Disc) drive, or a DVD (Digital Versatile Disk) drive.

The CPU 810 executes a predetermined process according to the program and the data stored in the memory 820 or the storage medium of the external storage device 860, processes data input from the input unit 830 or the wireless communication unit 850, and stores the processed data in the memory 820, outputs the processed data from the wireless communication unit 850 to another device, or stores the processed data in the storage medium of the external storage device 860.

While the terminal device 800 has been described as being a mobile terminal such as a smartphone, the present invention is not limited thereto, and the terminal device 800 may be another information processing device such as a PC (Personal Computer) or a tablet.

In the configuration described above, it is conceivable to determine whether to execute charging of the vehicle 200 according to the maximum charging power from the power supply facility 10 to the vehicle 200. However, there are cases where the power available for charging is low. When charging is performed in such cases, the amount of power used by the ECU 100 of the vehicle 200 or the like may be greater than the amount of power supplied from the power supply facility 10. Then, the power of the battery 214 of the vehicle 200 is reduced even though the battery 214 is being charged.

Therefore, the CPU 101 of the ECU 100 specifies a first value that can specify the maximum power that can be output from the power supply facility 10 to the vehicle 200, and performs control so as to charge the battery 214 when the first value is greater than a predetermined second value, and performs control so as not to charge the battery 214 when the first value is less than the second value.

When the maximum power that can be output from the power supply facility 10 to the vehicle 200 is less than the power consumed in the vehicle 200 other than power for charging, the power of the battery 214 is consumed during charging. According to the above configuration, charging of the battery 214 is performed when the maximum power is greater than the predetermined second value, and charging of the battery 214 is not performed when the maximum power is less than the predetermined second value. As a result, it is possible to suppress a reduction in the amount of power stored in the battery 214 during charging.

FIG. 2 is a flowchart illustrating the flow of a charging control process according to the first embodiment. With reference to FIG. 2, this charging control process is called from a higher-level process and executed by the ECU 100 of the vehicle 200 at predetermined intervals.

The CPU 101 of the ECU 100 of the vehicle 200 determines whether the AC charging connector 17 or the DC charging connector 18 is connected to the inlet 202 (step S111). When it is determined that no connector is connected (NO in step S111), the CPU 101 returns the process to be executed to the higher-level process that called this charging control process.

When it is determined that the AC charging connector 17 or the DC charging connector 18 is connected (YES in step S111), the CPU 101 checks whether communication with the power supply facility 10 is possible using the interface 103 (step S112). When it is determined that communication with the power supply facility 10 is not possible (NO in step S112), the CPU 101 estimates the maximum current in charging from the power supply facility 10 (step S113). The maximum current can be estimated, for example, by storing the charging history, such as the position of each power supply facility 10 and the maximum current during charging, in the memory 102, specifying the power supply facility 10 from the current position of the vehicle 200, and searching for the maximum value of the maximum current during charging from the past charging history of the specified power supply facility 10. The average value of the maximum current may be used instead of the maximum value of the maximum current.

On the other hand, when it is determined that communication with the power supply facility 10 is possible (YES in step S111), the CPU 101 acquires the maximum current that can be output during charging from the power supply facility 10 (step S114). The maximum current may be a value that is determined in advance based on the performance of the power supply facility 10. When the vehicle 200 is charged with surplus power obtained by subtracting the power used by the electrical device 21 from the power generated by the solar battery 30, the maximum current may be a value obtained by dividing the surplus power by the charging voltage. The maximum current may be a value obtained by dividing the power that can be supplied from the distribution board 40 to the power supply facility 10 by the charging voltage. In the case of AC, the current and voltage values are effective values, and the power is effective power determined in consideration of the power factor.

After step S113 or step S114, the CPU 101 of the ECU 100 calculates consumed power other than power for charging during external charging of the vehicle 200 (step S115). The consumed power other than power for charging is the power consumed by the ECU 100 (for example, several tens of watts to several hundreds of watts) and the power consumed by the additional function 215 that operates in conjunction during external charging, for example. However, the present invention is not limited thereto, and the consumed power other than power for charging during external charging of the vehicle 200 may be the power consumed by the ECU 100 when the vehicle 200 is not provided with the additional function 215, or even when the vehicle 200 is provided with the additional function 215, may be the power consumed by the ECU 100 when the additional function 215 does not operate during external charging. The power consumed by a target device may be calculated from values detected by a current sensor, a voltage sensor, or the like while the target device is actually operated, or may be evaluated in advance, estimated, and specified through experiments or simulations of the target device in the design stage of the vehicle 200.

Next, the CPU 101 specifies the charging efficiency (step S116). As the charging efficiency, for example, the efficiency of power transmission through a power line from the inlet 202 to the battery 214 of the vehicle 200 or the efficiency of power transmission through a power line from the power supply facility 10 to the battery 214 of the vehicle 200 may be specified.

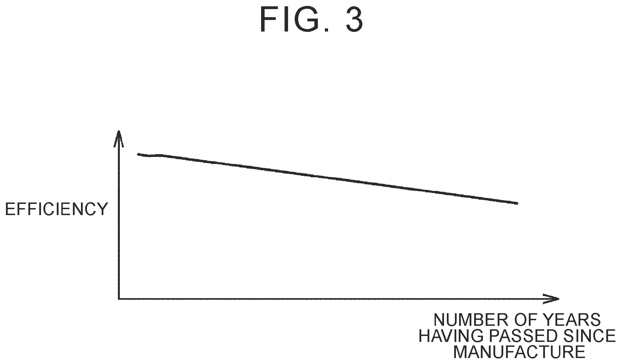

FIG. 3 is a graph indicating the aging deterioration of the efficiency of power transmission through the power line from the inlet 202 to the battery 214 of the vehicle 200 according to the embodiment. With reference to FIG. 3, as indicated in the graph, the efficiency of power transmission through the power line from the inlet 202 to the battery 214 of the vehicle 200 deteriorates when the resistance of the power line increases as years pass since manufacture. Therefore, the efficiency of power transmission through the power line from the inlet 202 to the battery 214 of the vehicle 200 can be specified, and the charging efficiency can be specified, from the number of years that have passed since the manufacture of the vehicle 200.

Returning to FIG. 2, the CPU 101 of the ECU 100 determines whether the consumed power calculated in step S115 is less than the maximum current specified in step S113 or step S114 x charging voltage x charging efficiency (step S117). When it is determined that the consumed power is less than maximum current x charging voltage x charging efficiency (YES in step S117), the CPU 101 performs control so as to start external charging (step S118).

On the other hand, when it is determined that the consumed power is not less than maximum current x charging voltage x charging efficiency (NO in step S117), the CPU 101 controls the HMI 130 so as to indicate that external charging is not started (step S119). After step S118 or step S119, the CPU 101 returns the process to be executed to the higher-level process that called this charging control process.

### Second Embodiment

In the first embodiment, as indicated in step S117 and step S118 in FIG. 2, it is determined whether to start external charging by comparing the consumed power with the maximum power corresponding to the maximum current. In a second embodiment, it is determined whether to start external charging by comparing a consumed current corresponding to the consumed power with the maximum current.

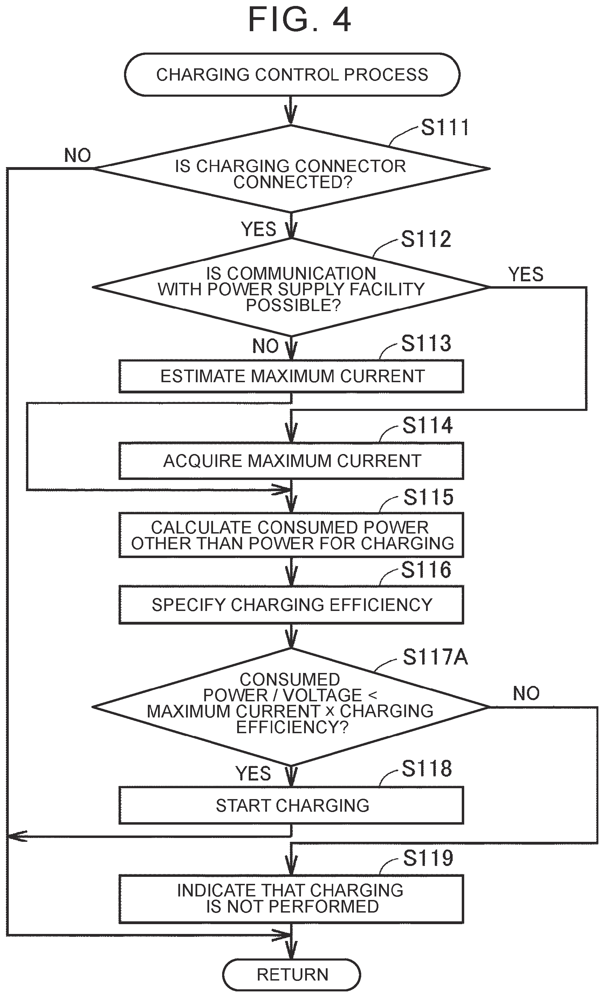

FIG. 4 is a flowchart illustrating the flow of a charging control process according to the second embodiment. With reference to FIG. 4, this charging control process is called from a higher-level process and executed by the ECU 100 of the vehicle 200 at predetermined intervals. In FIG. 4 for the second embodiment, the difference from FIG. 2 for the first embodiment includes step S117A, so only the different portion will be described and redundant description will not be repeated.

After step S116 mentioned above, the CPU 101 of the ECU 100 determines whether a value obtained by dividing the consumed power calculated in step S115 by the charging voltage is less than the maximum current specified in step S113 or step S114 x charging efficiency (step S117A). When it is determined that consumed power / charging voltage is less than maximum current x charging efficiency (YES in step S117A), the CPU 101 performs control so as to start external charging (step S118).

On the other hand, when it is determined that consumed power / charging voltage is not less than maximum current x charging efficiency (NO in step S117A), the CPU 101 controls the HMI 130 so as to indicate that external charging is not started (step S119). After step S118 or step S119, the CPU 101 returns the process to be executed to the higher-level process that called this charging control process.

### Third Embodiment

In the first and second embodiments, the consumed power other than power for charging is calculated as indicated in step S115 in each of FIGS. 2 and 4. In a third embodiment, the method of calculating the consumed power other than power for charging is changed according to whether there is non-charging consumed power other than power consumed by the ECU 100.

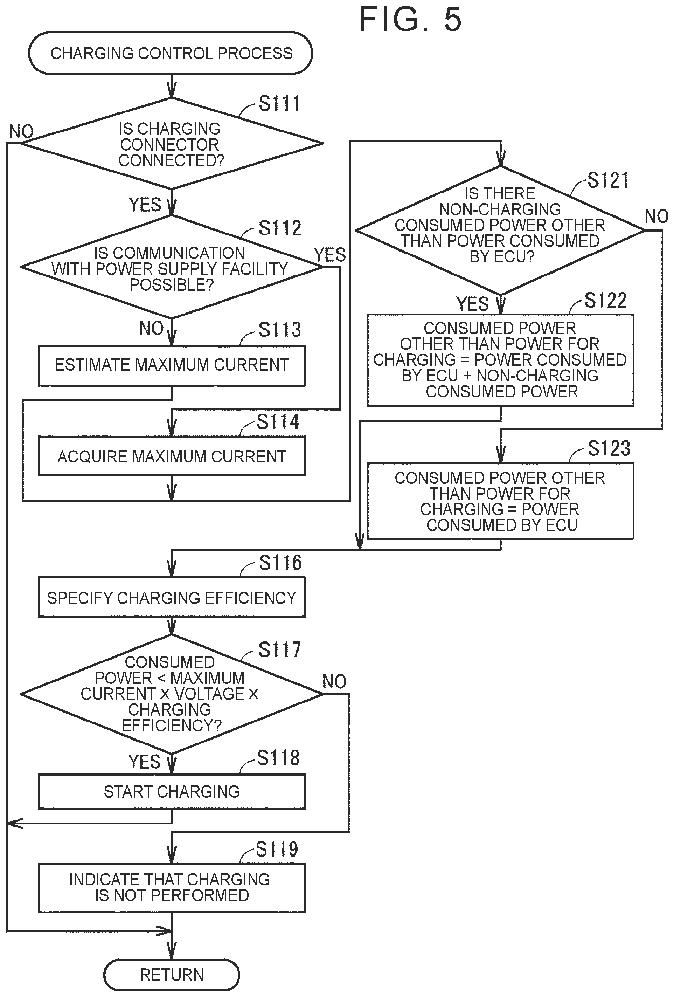

FIG. 5 is a flowchart illustrating the flow of a charging control process according to the third embodiment. With reference to FIG. 5, this charging control process is called from a higher-level process and executed by the ECU 100 of the vehicle 200 at predetermined intervals. In FIG. 5 for the third embodiment, the difference from FIG. 2 for the first embodiment and FIG. 4 for the second embodiment includes step S121 to step S123, so only the different portions will be described and redundant description will not be repeated.

After step S113 or step S114 mentioned above, the CPU 101 of the ECU 100 determines whether there is non-charging consumed power other than power consumed by the ECU 100 (step S121). For example, when the additional function 215 operates during external charging, it is determined that there is non-charging consumed power other than power consumed by the ECU 100. Furthermore, when the additional function 215 does not operate during external charging, it is determined that there is no non-charging consumed power other than power consumed by the ECU 100.

When it is determined that there is non-charging consumed power other than power consumed by the ECU 100 (YES in step S121), the CPU 101 calculates power obtained by adding the non-charging consumed power other than the power consumed by the ECU 100 to the power consumed by the ECU 100 as the consumed power other than power for charging during external charging of the vehicle 200 (step S122). The power consumed by the ECU 100 and the power consumed by the additional function 215 that operates in conjunction during external charging may be calculated from values detected by a current sensor, a voltage sensor, or the like while the target device is actually operated, or may be specified through experiments or simulations of the target device in the design stage of the vehicle 200.

On the other hand, when it is determined that there is no non-charging consumed power other than power consumed by the ECU 100 (NO in step S121), the CPU 101 calculates the power consumed by the ECU 100 as the consumed power other than power for charging during external charging of the vehicle 200 (step S123). After step S 122 or step S123, the CPU 101 advances the process to be executed to the process in step S116 mentioned above.

### Fourth Embodiment

In the third embodiment, as indicated in step S117 and step S118 in FIG. 2 for the first embodiment, it is determined whether to start external charging by comparing the consumed power with the maximum power corresponding to the maximum current. In a fourth embodiment, it is determined whether to start external charging by comparing a consumed current corresponding to the consumed power with the maximum current.

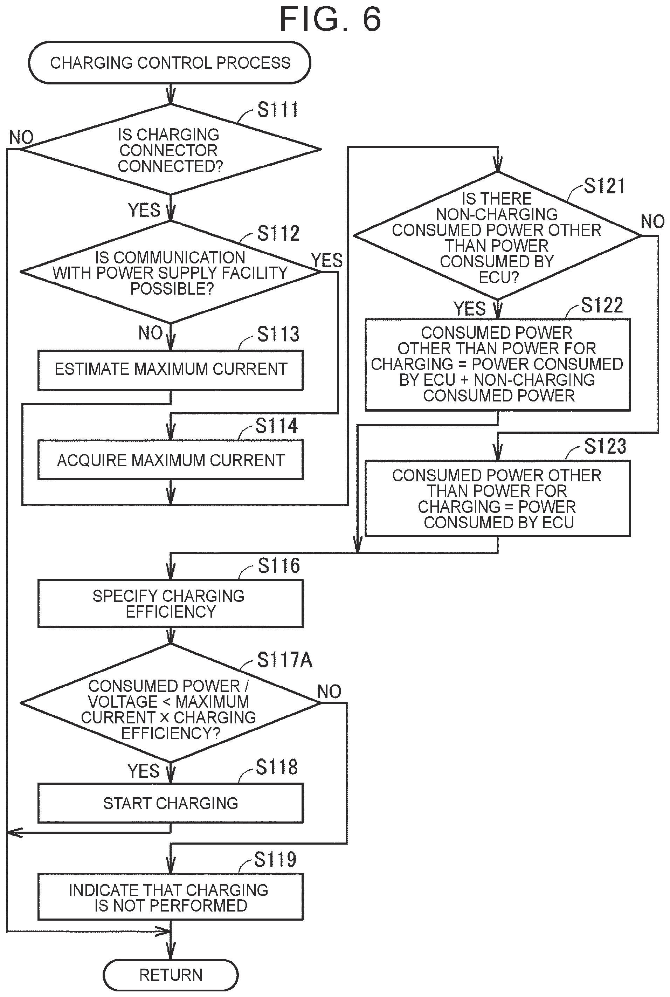

FIG. 6 is a flowchart illustrating the flow of a charging control process according to the fourth embodiment. With reference to FIG. 6, this charging control process is called from a higher-level process and executed by the ECU 100 of the vehicle 200 at predetermined intervals. In FIG. 6 for the fourth embodiment, the difference from FIG. 5 for the third embodiment includes step S117A. The difference is the same as that in the second embodiment, and therefore redundant description will not be repeated.

### Modifications

In the embodiments described above, the maximum current is specified in step S113 and step S114 in FIGS. 2 and 4 to 6. However, the present invention is not limited thereto, and the maximum power may be specified instead of the maximum current. When the power supply voltage from the power supply facility 10 to the vehicle 200 is constant, the maximum current is equal to a value obtained by dividing the maximum power by the power supply voltage.

In the embodiments described above, the non-charging consumed power is calculated, as indicated in step S115 in FIGS. 2 and 4 and step S121 to step S123 in FIGS. 5 and 6. Then, the non-charging consumed current corresponding to the non-charging consumed power is calculated by dividing the non-charging consumed power by the charging voltage, as indicated in step S117A in FIGS. 4 and 6. However, the present invention is not limited thereto, and the non-charging consumed current may be set to a value that is determined in advance in the manufacturing stage of the vehicle 200 (for example, a predetermined value such as 1 A or 6 A). Furthermore, when the current consumed by the additional function 215 during external charging is small, the non-charging consumed current may be set to a predetermined value that is greater than 0 A and equal to or less than 1 A.

Furthermore, the non-charging consumed power that is used in step S117 in FIGS. 2 and 5 may be set to a value obtained by multiplying a value (for example, a predetermined value such as 1 A or 6 A) determined in advance in the manufacturing stage of the vehicle 200 by the charging voltage. Furthermore, when the current consumed by the additional function 215 during external charging is small, the non-charging consumed power may be set to a value obtained by multiplying a predetermined value that is greater than 0 A and equal to or less than 1 A by the charging voltage.

In the embodiments described above, the process is switched according to whether the additional function 215 is operating or not, as indicated in step S121 in FIGS. 5 and 6. The setting to switch whether the additional function 215 is operating or not during external charging may be made using the HMI 130, for example. A dedicated switch for switching whether the additional function 215 is operating or not may be provided on the HMI 130 or near the inlet 202 for charging, for example.

The embodiments described above can be considered as a disclosure of a charging control device such as the ECU 100. The embodiments can be considered as a disclosure of the vehicle 200 including the charging control device. The embodiments can be considered as a disclosure of a charging control method or a charging control program, such as that illustrated in FIG. 2, FIG. 4, FIG. 5, or FIG. 6, executed by the charging control device or the vehicle 200.

### Summary

As illustrated in FIG. 1, the ECU 100 is a device that controls charging of the vehicle 200 that is charged from the power supply facility 10. That is, the ECU 100 is a charging control device. As illustrated in FIG. 1, the vehicle 200 includes the battery 214. As illustrated in FIG. 1, the ECU 100 includes the CPU 101. As illustrated in FIGS. 2 and 4 to 6, the CPU 101 specifies a first value (which may be the maximum power itself, or may be a maximum current that can specify the maximum power, for example) that can specify the maximum power that can be output from the power supply facility 10 to the vehicle 200 (for example, the maximum power may be specified from the maximum current as indicated in steps S113, S114, and S117 in FIGS. 2 and 5; the first value may be specified as the maximum current that can specify the maximum power as indicated in steps S113, S114, and S117A in FIGS. 4 and 6), performs control so as to charge the battery 214 (for example, step S118 in FIGS. 2 and 4 to 6) when the first value is greater than a predetermined second value (which may be the power consumed in the vehicle 200 other than power for charging itself, or may be a consumed current that can specify the consumed power, for example), and performs control so as not to charge the battery 214 (for example, step S119 in FIGS. 2 and 4 to 6) when the first value is less than the second value.

When the maximum power that can be output from the power supply facility 10 to the vehicle 200 is less than the power consumed in the vehicle 200 other than power for charging, the power of the battery 214 is consumed during charging. According to the above configuration, charging of the battery 214 is performed when the maximum power is greater than the predetermined second value, and charging of the battery 214 is not performed when the maximum power is less than the predetermined second value. As a result, it is possible to suppress a reduction in the amount of power stored in the battery 214 during charging. Furthermore, it is possible to suppress the user feeling uncomfortable when the SOC (State of Charge) of the battery 214 decreases even though the battery is being charged.

As indicated in step S117 in FIGS. 2 and 5, the first value may be the value of the maximum power that can be output from the power supply facility 10 to the vehicle 200, and the second value may be the value of the power consumed in the vehicle 200 other than power for charging.

According to such a configuration, charging of the battery 214 is performed when the value of the maximum power is greater than the value of the consumed power, and charging of the battery 214 is not performed when the value of the maximum power is less than the value of the consumed power. As a result, it is possible to suppress a reduction in the amount of power stored in the battery 214 during charging.

As indicated in step S117A in FIGS. 4 and 6, the first value may be the value of a maximum current corresponding to the maximum power that can be output from the power supply facility 10 to the vehicle 200, and the second value may be the value of a consumed current corresponding to power consumed in the vehicle 200 other than power for charging.

According to such a configuration, charging of the battery 214 is performed when the value of the maximum current corresponding to the maximum power is greater than the value of the consumed current corresponding to the consumed power, and charging of the battery 214 is not performed when the value of the maximum current corresponding to the maximum power is less than the value of the consumed current corresponding to the consumed power. As a result, it is possible to suppress a reduction in the amount of power stored in the battery 214 during charging.

The second value may be greater than 0 (A) and equal to or less than 1 (A). According to such a configuration, charging of the battery 214 is not performed when the value of the maximum current value is significantly small. As a result, it is possible to suppress a reduction in the amount of power stored in the battery 214 during charging.

As indicated in step S115 in FIGS. 2 and 4 and steps S122 and S123 in FIGS. 5 and 6, the second value may be a value that can specify the power consumed in the vehicle 200 other than power for charging (which may be the consumed power itself, or may be a consumed current that can specify the consumed power, for example), and the power consumed in the vehicle 200 other than power for charging may be the power consumed by the ECU 100.

According to such a configuration, charging of the battery 214 is performed when the maximum power is greater than the power consumed by the ECU 100, and charging of the battery 214 is not performed when the maximum power is less than the power consumed by the ECU 100. As a result, it is possible to suppress a reduction in the amount of power stored in the battery 214 during charging.

As illustrated in FIG. 1, the vehicle 200 may further include the additional function 215 that consumes power while being charged from the power supply facility 10. As indicated in step S115 in FIGS. 2 and 4 and step S122 in FIGS. 5 and 6, the second value may be a value that can specify the power consumed in the vehicle 200 other than power for charging (which may be the consumed power itself, or may be a consumed current that can specify the consumed power, for example), and the power consumed in the vehicle 200 other than power for charging may be power obtained by adding the power consumed by the additional function 215 to the power consumed by the ECU 100.

According to such a configuration, charging of the battery 214 is performed when the maximum power is greater than the power obtained by adding the power consumed by the additional function 215 to the power consumed by the ECU 100, and charging of the battery 214 is not performed when the maximum power is less than the power obtained by adding the power consumed by the additional function 215 to the power consumed by the ECU 100. As a result, it is possible to suppress a reduction in the amount of power stored in the battery 214 during charging.

As illustrated in FIG. 1, the vehicle 200 may further include the additional function 215 that consumes power while being charged from the power supply facility 10. As indicated in steps S121 to S123 in FIGS. 5 and 6, steps S116, S118, and S119 in FIGS. 5 and 6, step S117 in FIG. 5, and step S117A in FIG. 6, when the additional function 215 does not operate, the CPU 101 may perform control so as to charge the battery 214 when the first value is greater than the second value (for example, a value that can specify the power consumed by the ECU 100), and perform control so as not to charge the battery 214 when the first value is less than the second value, and when the additional function 215 does not operate, the CPU 101 may perform control so as to charge the battery 214 when the first value is greater than a predetermined third value (for example, a value that can specify the power obtained by adding the power consumed by the additional function 215 to the power consumed by the ECU 100), and perform control so as not to charge the battery 214 when the first value is less than the third value, and the third value may be a value that is greater than the second value. The processor may be configured to charge the battery 214 when the in-vehicle facility is in the stopped state and the first value is greater than the second value. The processor may be configured to refrain from charging the battery 214 when the in-vehicle facility is in the stopped state and the first value is less than the second value. The processor may be configured to charge the battery 214 when the in-vehicle facility is in the stopped state and the first value is greater than the third value. The processor may be configured to refrain from charging the battery 214 when the in-vehicle facility is in the stopped state and the first value is less than the third value. The processor may be configured to determine whether the first value is greater than the third value.

According to such a configuration, when the additional function 215 is operating, charging of the battery 214 is performed when the first value is greater than the third value, and charging of the battery 214 is not performed when the first value is less than the third value. On the other hand, when the additional function 215 is not operating, charging of the battery 214 is performed when the first value is greater than the second value, and charging of the battery 214 is not performed when the first value is less than the second value. As a result, it is possible to suppress a reduction in the amount of power stored in the battery 214 during charging.

As indicated in steps S122 and S123 in FIGS. 5 and 6, the third value may be a value that can specify the power obtained by adding the power consumed by the additional function 215 to the power consumed by the ECU 100, and the second value may be a value that can specify the power consumed by the ECU 100. The processor may be configured to use the third value to specify the power obtained by adding the power consumed by the in-vehicle facility to the power consumed by the charging control device. The processor may be configured to use the second value to specify the power consumed by the charging control device.

According to such a configuration, when the additional function 215 is operating, charging of the battery 214 is performed when the maximum power is greater than the power obtained by adding the power consumed by the additional function 215 to the power consumed by the ECU 100, and charging of the battery 214 is not performed when the maximum power is less than the power obtained by adding the power consumed by the additional function 215 to the power consumed by the ECU 100. On the other hand, when the additional function 215 is not operating, charging of the battery 214 is performed when the maximum power is greater than the power consumed by the ECU 100, and charging of the battery 214 is not performed when the maximum power is less than the power consumed by the ECU 100. As a result, it is possible to suppress a reduction in the amount of power stored in the battery 214 during charging.

As indicated in step S117 in FIGS. 2 and 5 and step S117A in FIGS. 4 and 6, the CPU 101 of the ECU 100 may compare the first value and the second value in consideration of a loss due to aging deterioration of a power path. The processor may be configured to compare the first value and the second value based on a loss due to aging deterioration of a power path.

According to such a configuration, even when the power path has deteriorated over time, it is possible to appropriately compare the maximum power that can be output from the power supply facility 10 to the vehicle 200 with the power consumed in the vehicle 200 other than power for charging. As a result, it is possible to appropriately suppress a reduction in the amount of power stored in the battery 214 during charging.

The embodiments disclosed herein should be considered to be illustrative in all respects and not restrictive. The scope of this disclosure is defined by the claims, rather than the above description of the embodiments, and is intended to include all modifications within the meaning and scope equivalent to those of the claims.

## Claims

1. A charging control device (100) for a vehicle (200) that is charged from a power supply facility (10), the charging control device (100) comprising a processor (101), wherein:
the vehicle (200) includes a battery (214); and
the processor (101) is configured to
determine a first value that allows a determination of maximum power of power output from the power supply facility (10) to the vehicle (200),
charge the battery (214) in a case where the first value is greater than a predetermined second value, and
refrain from charging the battery (214) in a case where the first value is less than the second value.

2. The charging control device (100) according to claim 1, wherein:
the first value is a value of the maximum power; and
the second value is a value of power consumed in the vehicle (200) other than power for charging.

3. The charging control device (100) according to claim 1, wherein:
the first value is a value of a maximum current corresponding to the maximum power; and
the second value is a value of a consumed current corresponding to power consumed in the vehicle (200) other than power for charging.

4. The charging control device (100) according to claim 3, wherein the second value is greater than 0 A and equal to or less than 1 A.

5. The charging control device (100) according to claim 1, wherein:
the second value is a value that allows a determination of power consumed in the vehicle (200) other than power for charging; and
the power consumed in the vehicle (200) other than power for charging is power consumed by the charging control device (100).

6. The charging control device (100) according to claim 1, wherein:
the vehicle (200) further includes an in-vehicle facility (215) configured to consume power while being charged from the power supply facility (10);
the second value is a value that allows a determination of power consumed in the vehicle (200) other than power for charging; and
the power consumed in the vehicle (200) other than power for charging is power obtained by adding the power consumed by the in-vehicle facility (215) to power consumed by the charging control device (100).

7. The charging control device (100) according to claim 1, wherein:
the vehicle (200) further includes an in-vehicle facility (215) configured to consume power while being charged from the power supply facility (10);
the processor (101) is further configured to
charge the battery (214) in a case where the in-vehicle facility (215) is in a stopped state and the first value is greater than the second value,
refrain from charging the battery (214) in a case where the in-vehicle facility (215) is in the stopped state and the first value is less than the second value,
charge the battery (214) in a case where the in-vehicle facility (215) is in the stopped state and the first value is greater than a predetermined third value, and
refrain from charging the battery (214) in a case where the in-vehicle facility (215) is in the stopped state and the first value is less than the third value; and
the third value is a value that is greater than the second value.

8. The charging control device (100) according to claim 7, wherein:
the third value is a value that allows a determination of power obtained by adding the power consumed by the in-vehicle facility (215) to power consumed by the charging control device (100); and
the second value is a value that allows a determination of the power consumed by the charging control device (100).

9. The charging control device (100) according to claim 1, wherein the processor (101) is further configured to compare the first value and the second value based on a loss due to aging deterioration of a power path.

10. The charging control device (100) according to claim 1, wherein the processor (101) is further configured to determine whether the first value is greater than the second value.

11. The charging control device (100) according to claim 1, wherein the first value is a value that is used to determine the maximum power or the maximum current corresponding to the maximum power.

12. The charging control device (100) according to claim 5, wherein the second value is a value that is used to determine the power consumed in the vehicle (200) other than the power for charging.

13. The charging control device (100) according to claim 7, wherein the processor (101) is further configured to determine whether the first value is greater than the third value.

14. The charging control device (100) according to claim 8, wherein:
the second value is a value that is used to determine the power consumed by the charging control device (100); and
the third value is a value that is used to determine the power obtained by adding the power consumed by the in-vehicle facility (215) to the power consumed by the charging control device (100).
